# EUROPÄISCHE PATENTSCHRIFT

(11) **EP 2 698 791 B1**
(45) Veröffentlichungstag und Bekanntmachung des Hinweises auf die Patenterteilung: **30.12.2020**
(21) Anmeldenummer: 13174023.5
(22) Anmeldetag: 27.06.2013
(51) Int. Cl.: H01B 3/24, B82Y 30/00, C08K 3/22, H01H 33/22

(54) **Nanopartikel enthaltende dielektrische Zusammensetzung**
Dielectric compound containing nanoparticles
Composition diélectrique contenant des nanoparticules

(30) Priorität: 29.06.2012 DE 102012211255
(43) Veröffentlichungstag der Anmeldung: 19.02.2014
(73) Patentinhaber: Schneider Electric Industries SAS, 92500 Rueil-Malmaison (FR)
(72) Erfinder: Kaltenborn, Uwe, 93049 Regensburg (DE)
(74) Vertreter: Manitz Finsterwald Patent- und Rechtsanwaltspartnerschaft mbB

(56) Entgegenhaltungen:
- WO-A1-2004/034409
- WO-A1-2010/142346

## Beschreibung

Die vorliegende Erfindung betrifft eine dielektrische Zusammensetzung, welche ein dielektrisches Fluid enthält, deren Verwendung und eine elektrische Einrichtung, welche eine solche dielektrische Zusammensetzung als Isolationsmedium enthält.

Dielektrische Zusammensetzungen werden als Isolationsmedien bei einer Vielzahl von Anwendungen und beispielsweise in elektrischen Einrichtungen, welche insbesondere im Mittel-, Hochspannungs- oder Höchstspannungsbereich betrieben werden, eingesetzt, um die spannungsführenden Bauteile elektrisch von anderen Bauteilen zu isolieren. Ein bekanntes und seit Jahrzehnten für diesen Zweck weithin eingesetztes dielektrisches Isolationsmedium ist Schwefelhexafluorid, welches sich durch hervorragende dielektrische Eigenschaften sowie durch exzellente Lichtbogenlöscheigenschaften auszeichnet. Allerdings weisen Schwefelhexafluorid und dessen Zersetzungsprodukte ein hohes Treibhauspotential sowie ein hohes Kohlendioxidäquivalent auf und führen deshalb zu einer zunehmenden Nachfrage nach alternativen Materialien.

Zu diesem Zweck wird in der WO 2010/142346 A1 beispielsweise die Verwendung von Fluorketonen als dielektrisches Isolationsmedium vorgeschlagen. Zwar sind Fluorketone wesentlich umweltfreundlicher und insbesondere auch klimafreundlicher als Schwefelhexafluorid. Allerdings sind die anwendungstechnischen Eigenschaften von Fluorketonen schlechter als die von Schwefelhexafluorid. Insbesondere hat es sich herausgestellt, dass Fluorketone bei der Verwendung als Isolationsmedium in elektrisehen Einrichtungen eine verhältnismäßig geringe Lebensdauer aufweisen, da sie unter den Betriebsbedingungen zur Zersetzung neigen. Aus diesem Grund ändert sich die isolierende Wirkung dieser Substanzen mit zunehmender Betriebszeit, weswegen sich die Betriebssicherheit der damit betriebenen elektrischen Einrichtung mit zunehmender Betriebszeit verschlechtert.

Um diesem Nachteil zu begegnen, könnte das Isolationsmediums regelmäßig nach vergleichsweise kurzen Betriebszeiten in der elektrischen Einrichtung vollständig entfernt und durch frisches Isolationsmedium ersetzt werden, um so einen sicheren Betrieb der elektrischen Einrichtung zu gewährleisten. Ein solcher häufiger Austausch des Isolationsmediums ist jedoch personalintensiv sowie mit entsprechenden Stillstandszeiten der elektrischen Einrichtung verbunden, also sowohl mit einem hohen Aufwand als auch mit hohen Kosten verbunden. Aus diesen Gründen hat sich die Verwendung von Fluorketonen als dielektrisches Isolationsmedium in elektrischen Einrichtungen bisher nicht durchsetzen können.

Daher besteht die Aufgabe der vorliegenden Erfindung darin, ein umweltfreundliches und insbesondere klimafreundliches dielektrisches Isolationsmedium anzugeben, welches sich durch gute dielektrische Eigenschaften auszeichnet und zudem eine hohe Stabilität sowie eine hohe Lebensdauer aufweist, und zwar insbesondere auch unter den Betriebsbedingungen einer elektrischen Einrichtung im Mittel-, Hochspannungs- oder Höchstspannungsbereich.

Erfindungsgemäß wird diese Aufgabe durch eine dielektrische Zusammensetzung gemäß dem Patentanspruch 1 und insbesondere durch eine dielektrische Zusammensetzung gelöst, welche wenigstens ein dielektrisches organisches Fluid und Nanopartikel enthält, wobei die Zusammensetzung als dielektrisches Fluid wenigstens ein Fluorketon und/oder wenigstens ein Fluorolefin enthält und wobei mindestens 50 % der Nanopartikel aus einem Material zusammengesetzt sind, welches eine relative Dielektrizitätskonstante εᵣ zwischen 1 und 200 aufweist, und, wobei zumindest ein Teil der Nanopartikel aus einem Material zusammengesetzt ist, welches aus der Gruppe ausgewählt ist, welche aus Titandioxid, Zinkoxid, Eisenoxid, Zirkoniumoxid, Cerdioxid und beliebigen Kombinationen aus zwei oder mehr der vorgenannten Verbindungen besteht. Dabei sind die

Nanopartikel in dem dielektrischen Fluid bevorzugt dispergiert. Zusätzlich können der Mischung herkömmliche Fluide, wie Edelgase, Sauerstoff, Stickstoff, ein Stickstoffoxid, Kohlendioxid und/oder Kohlenmonoxid, hinzugefügt werden.

Überraschenderweise weist eine derartige dielektrische Zusammensetzung, welche - zusätzlich zu einem dielektrischen organischen Fluid, wie Fluorketon und/oder Fluorolefin - Nanopartikel enthält, unter den Betriebsbedingungen einer elektrischen Einrichtung, wie z.B. unter den Bedingungen einer im Mittel-, Hochspannungs- oder Höchstspannungsbereich betriebenen Schalteinrichtung oder eines Transformators, eine im Vergleich zu reinem Fluorketon und Fluorolefin erhöhte Stabilität und eine erhöhte Lebensdauer auf. Mithin kann die erfindungsgemäße dielektrische Zusammensetzung in einer solchen elektrischen Einrichtung beträchtlich länger als reines Fluorketon und Fluorolefin eingesetzt werden, weswegen eine betriebsbedingte Verschlechterung der dielektrischen Eigenschaften vermieden wird. Diese Lösung basiert insbesondere auch auf der Erkenntnis, dass bei dem Betrieb von elektrischen Einrichtungen, wie Schalteinrichtungen und Transformatoren im Mittel-, Hochspannungs- oder Höchstspannungsbereich, infolge von partiellen Entladungen bzw. Mikroentladungen freigesetzte Energie zumindest teilweise in ultraviolette (UV-) Strahlung umgewandelt wird. Aus diesem Grund ist die dielektrische Zusammensetzung bei dem Betrieb der elektrischen Einrichtung einer Bestrahlung mit UV-Strahlung ausgesetzt, welche zu Brüchen der Kohlenwasserstoffketten und somit zu einer Zersetzung der Fluorketone bzw. Fluorolefine führt. Ohne an eine Theorie gebunden werden zu wollen, wird es erachtet, dass der Zusatz von Nanopartikeln zu der dielektrischen Zusammensetzung infolge der Absorption von UV-Strahlung und der auftretenden diffusen Streuung und Reflexion von UV-Strahlung durch die Nanopartikel zu einem Schutz des Fluorketons bzw. Fluorolefins vor Zersetzung führt und so die Stabilität und Lebensdauer des Fluorketons bzw. Fluorolefins erhöht. Mithin zeichnet sich die erfindungsgemäße dielektrische Zusammensetzung durch die Vorteile von dielektrischen organischen Verbindungen, wie Fluorketonen und Fluorolefinen, nämlich eine hohe Umweltfreundlichkeit und Klimafreundlichkeit, aus, ohne die Nachteile reiner Fluorketone und Fluorolefine, nämlich eine geringe Stabilität und Lebensdauer bei dem Betrieb einer elektrischen Einrichtung im Mittel-, Hochspannungs- oder Höchstspannungsbereich, aufzuweisen.

Des Weiteren bildet die erfindungsgemäße dielektrische Zusammensetzung, welche neben einem dielektrischen Fluid in dem Fluid dispergierte Nanopartikel enthält, bei der Anwendung in einer elektrischen Einrichtung, wie z.B. in einer Schalteinrichtung oder einem Transformator im Mittel-, Hochspannungs- oder Höchstspannungsbereich, überraschenderweise eine stabile Dispersion mit einer ausreichend hohen Homogenität aus. Dabei ist die stabile Dispersion u.a. darauf zurückzuführen, dass die Nanopartikel infolge der Absorption von UV-Strahlung eine erhöhte Brownschen Bewegung aufweisen, welche eine Dispergierung der Nanopartikel in dem dielektrischen Fluid begünstigt. Zudem können die Nanopartikel bei geeigneter Auswahl bzw. bei geeigneter chemischer Aktivierung ihrer Partikeloberfläche eine Elektronegativität aufweisen. Solche elektronegativen Partikel können dann Elektronen, die durch Entladungen im Fluid oder an Grenzflächen von Fluid und festen Isolierstoffen oder von Fluid und elektrischen Leitern oder von Fluid, festen Isolierstoffen und Leitern freigesetzt werden, adsorbieren. Derart aufgeladene Partikel können sich dann im elektrischen Feld bewegen und in Bereichen hoher Feldstärken zu einer Homogenisierung des elektrischen Feldes beitragen. Zusätzlich dazu kann durch den Einsatz von Nanopartikeln mit einer hohen Dielektrizitätskonstante oder von Nanopartikeln, welche durch eine Funktionalisierung ihrer Oberfläche eine hohe Dielektrizitätskonstante aufweisen, ebenfalls ein Beitrag zur Reduzierung des elektrischen Feldes geleistet werden.

Gemäß der vorliegenden Patentanmeldung wird unter einem Fluid sowohl eine gasförmige Substanz als auch eine flüssige Substanz verstanden. Unter Fluorketon bzw. Fluorolefin wird ein Keton bzw. Olefin verstanden, in dem wenigstens ein an ein Kohlenstoffatom gebundenes Wasserstoffatom durch ein Fluoratom substituiert ist. Hingegen bezeichnet der Begriff Nanopartikel im Sinne der vorliegenden Patentanmeldung Feststoffteilchen, die einen mittleren Partikeldurchmesser (d₅₀) von kleiner oder gleich 1.000 nm aufweisen

Damit die Zusammensetzung ausreichend hohe dielektrische Eigenschaften aufweist bzw. die dielektrische Eigenschaften des dielektrischen Fluids nicht unterminiert werden, ist erfindungsgemäß zumindest ein Teil der Nanopartikel aus einem Material zusammengesetzt, welches eine relative Dielektrizitätskonstante εᵣ zwischen 1 und 200 aufweist.

Um besonders gute dielektrischen Eigenschaften der erfindungsgemäßen Zusammensetzung sicherzustellen, sind erfindungsgemäß mindestens 50 %, bevorzugt mindestens 75 %, besonders bevorzugt mindestens 90 %, insbesondere bevorzugt mindestens 95%, ganz besonders bevorzugt mindestens 99% und höchst bevorzugt alle Nanopartikel aus einem Material zusammengesetzt, welches eine relative Dielektrizitätskonstante εᵣ zwisehen 1 und 200 aufweist.

Erfindungsgemäß ist zumindest ein Teil der Nanopartikel aus einem Material zusammengesetzt, welches aus der Gruppe ausgewählt ist, welche aus Titandioxid, Zinkoxid, Eisenoxid, Zirkoniumoxid, Cerdioxid und beliebigen Kombinationen aus zwei oder mehr der vorgenannten Verbindungen besteht.

Aufgrund seiner besonders guten UV absorbierenden Eigenschaften ist es gemäß einer ganz besonders bevorzugten Ausführungsform der vorliegenden Erfindung besonders bevorzugt, dass zumindest ein Teil der Nanopartikel aus Titandioxid zusammengesetzt ist. Durch den Zusatz von Nanopartikeln aus Titandioxid zu einem dielektrischen Fluid wird eine besonders hohe Stabilität und lange Lebensdauer der Zusammensetzung insbesondere auch unter den Betriebsbedingungen in elektrischen Einrichtungen im Mittel-, Hochspannungs- oder Höchstspannungsbereich erreicht. Dabei kann das Titandioxid als Rutil, Anatas und/oder Brookit vorliegen, wobei die Anatas-Modifikation besonders bevorzugt ist.

Um Radikalbildung infolge photokatalytischer Reaktionen auf der Oberfläche von beispielsweise Titandioxidpartikeln auch nach längerer Betriebsdauer zuverlässig zu vermeiden, wird es in Weiterbildung des Erfindungsgedankens vorgeschlagen, Nanopartikel einzusetzen, von denen zumindest ein Teil beschichtet ist, und zwar bevorzugt mit einer oder mehreren siliziumorganischen oder karboorganischen Verbindung(en), wie insbesondere mit einem oder mehreren Silan(en) und/oder Fluorsilan(en).

Um die vorstehend für die einzelnen Ausführungsformen genannten Vorteile in besonders hohem Ausmaß zu erreichen, ist es gemäß einer weiteren bevorzugten Ausführungsform der vorliegenden Erfindung vorgesehen, dass mindestens 50 %, bevorzugt mindestens 75 %, besonders bevorzugt mindestens 90 %, insbesondere bevorzugt mindestens 95%, ganz besonders bevorzugt mindestens 99% und höchst bevorzugt alle Nanopartikel aus einem vorstehend spezifizierten Material, also insbesondere bevorzugt einem Metalloxid, wie Titandioxid, Zinkoxid, Eisenoxid, Zirkoniumoxid oder Cerdioxid, zusammengesetzt sind.

Grundsätzlich ist die vorliegende Erfindung bezüglich der Partikelgröße der eingesetzten Nanopartikel nicht beschränkt. Um eine gute und möglichst stabile Dispersion der Nanopartikel in dem dielektrischen Fluid zu erreichen, sollten die Partikel möglichst klein sein. Andererseits sind zu kleine Partikel gesundheitsschädlich, so dass es aus arbeitsschutztechnischen Gründen bevorzugt ist, dass die Partikel eine gewisse Größe nicht unterschreiten. Als Kompromiss zwischen diesen beiden gegenläufigen Tendenzen ist es bevorzugt, dass die Nanopartikel einen mittleren Partikeldurchmesser (d₅₀) von 1 bis 1.000 nm, bevorzugt von 5 bis 100 nm, besonders bevorzugt von 10 bis 50 nm, insbesondere bevorzugt von 15 bis 50 nm, weiter bevorzugt von 17 bis 50 nm, ganz besonders bevorzugt von 17 bis 30 nm und höchst bevorzugt von 17 bis 25 nm aufweisen. Im Einklang mit der fachüblichen Definition dieses Parameters bezeichnet der mittlere Partikeldurchmesser (d₅₀) den Durchmesser, den 50% aller vorliegenden Partikel unterschreiten, d.h. 50% aller vorliegenden Partikel weisen einen kleineren Partikeldurchmesser als den d₅₀-Wert auf.

Um die vorstehend beschriebenen Vorteile, wie gute Dispergierbarkeit bei geringer Gesundheitsschädlichkeit, in besonders hohem Ausmaß zu erreichen, ist die Partikelgrößenverteilung der Nanopartikel vorzugsweise eng, d.h. wenige Partikel weisen einen beträchtlich größeren Durchmesser als den mittleren Durchmesser auf und wenige Partikel weisen einen beträchtlich niedrigeren Durchmesser als den mittleren Durchmesser auf. Ein Maß für eine solche Partikelgrößenverteilung ist beispielsweise der mittlere Partikeldurchmesser (d_{75/25}), unter dem im Sinne der vorliegenden Patentanmeldung der mittlere Partikeldurchmesser all derjenigen Partikel verstanden wird, welche einen Partikeldurchmesser aufweisen, den 25 bis 75% aller der vorliegenden Partikel aufweisen, d.h. einen Partikeldurchmesser, den nur 25% aller der vorliegenden Partikel unterschreiten und nur 25% aller der vorliegenden Partikel überschreiten. Zur Ermittlung dieses Werts wird zunächst eine Partikelverteilungskurve aufgenommen, bevor diejenigen Partikeldurchmesser bestimmt werden, welche 25 aller Partikel überschreiten (d₇₅-Wert) und welche 25 aller Partikel unterschreiten (d₂₅-Wert). Anschließend wird das Integral unter der Verteilungskurve zwischen dem d₂₅-Wert und dem d₇₅-Wert bestimmt und daraus der Mittelwert gebildet. Bei dieser Ausführungsform der vorliegenden Erfindung weisen die Nanopartikel einen mittleren Partikeldurchmesser (d_{75/25}) von 1 bis 1.000 nm, bevorzugt von 5 bis 100 nm, besonders bevorzugt von 10 bis 50 nm, insbesondere bevorzugt von 15 bis 50 nm, weiter bevorzugt von 17 bis 50 nm, ganz besonders bevorzugt von 17 bis 30 nm und höchst bevorzugt von 17 bis 25 nm auf.

Aus den gleichen Gründen ist es insbesondere bevorzugt, dass die Nanopartikel einen mittleren Partikeldurchmesser (d_{90/10}) von 1 bis 1.000 nm, bevorzugt von 5 bis 100 nm, besonders bevorzugt von 10 bis 50 nm, insbesondere bevorzugt von 15 bis 50 nm, weiter bevorzugt von 17 bis 50 nm, ganz besonders bevorzugt von 17 bis 30 nm und höchst bevorzugt von 17 bis 25 nm aufweisen. Unter dem mittleren d_{90/10}-Partikeldurchmesser wird im Sinne der vorliegenden Patentanmeldung der mittlere Partikeldurchmesser all derjenigen Partikel verstanden, welche einen Partikeldurchmesser aufweisen, den 10 bis 90% aller der vorliegenden Partikel aufweisen, d.h. einen Partikeldurchmesser, den nur 10% aller der vorliegenden Partikel unterschreiten und nur 10% aller der vorliegenden Partikel überschreiten.

Aus den vorstehenden Gründen wird es in Weiterbildung des Erfindungsgedankens vorgeschlagen, dass die Nanopartikel der dielektrischen Zusammensetzung einen mittleren Partikeldurchmesser (d_{99/1}) von 1 bis 1.000 nm, bevorzugt von 5 bis 100 nm, besonders bevorzugt von 10 bis 50 nm, insbesondere bevorzugt von 15 bis 50 nm, weiter bevorzugt von 17 bis 50 nm, ganz besonders bevorzugt von 17 bis 30 nm und höchst bevorzugt von 17 bis 25 nm aufweisen. Unter dem mittleren d_{99/1}-Partikeldurchmesser wird im Sinne der vorliegenden Patentanmeldung der mittlere Partikeldurchmesser all derjenigen Partikel verstanden, welche einen Partikeldurchmesser aufweisen, den 1 bis 99% aller der vorliegenden Partikel aufweisen, d.h. einen Partikeldurchmesser, den nur 1% aller der vorliegenden Partikel unterschreiten und nur 1% aller der vorliegenden Partikel überschreiten. Bei dieser engen Partikelgrößenverteilung weisen praktisch alle vorliegenden Nanopartikel einen vorstehend spezifizierten Partikeldurchmesser auf.

Alternativ dazu können auch Nanopartikel mit einer bimodalen Partikelgrößenverteilung eingesetzt werden, also Nanopartikel, von denen ein Teil einen vergleichsweise großen Partikeldurchmesser aufweist und der andere Teil einen vergleichsweise kleinen Partikeldurchmesser aufweist. Solche Nanopartikel mit einer bimodalen Partikelgrößenverteilung können technisch einfach durch das Mischen speziell ausgesiebter Fraktionen hergestellt werden. Durch den Einsatz solcher Nanopartikel mit einer bimodalen Partikelgrößenverteilung können zum einen die optischen Eigenschaften, und zwar vornehmlich durch die großen Partikel, und zum anderen die dielektrischen Eigenschaften, und zwar vornehmlich durch die kleinen Partikel, der dielektrischen Zusammensetzung geeignet optimiert werden. Alternativ dazu ist es auch möglich, eine Mischung von Nanopartikeln aus zwei verschiedenen Materialien mit jeweils verschiedenen Partikeldurchmessern einzusetzen, nämlich zum Beispiel eine Mischung aus Titandioxidpartikeln und Zinkoxidpartikeln.

Bei der vorstehend genannten Ausführungsform ist es bevorzugt, dass die Nanopartikel mit der bimodalen Partikelverteilung eine Fraktion von Partikeln mit einem mittleren Partikeldurchmesser (d₅₀) von kleiner als 10 nm und eine Fraktion von Partikeln mit einem mittleren Partikeldurchmesser (d₅₀) von 10 bis 100 nm, besonders bevorzugt von 10 bis 50 nm und ganz besonders bevorzugt von 10 bis 25 nm aufweisen.

Die Konzentration der Nanopartikel in der dielektrischen Zusammensetzung hängt insbesondere von der konkreten Anwendung ab, wird aber so hoch gewählt werden, dass eine ausreichend hohe UV-Absorption erreicht wird, aber so niedrig, dass nicht eine unverhältnismäßig hohe Sedimentation und keine nennenswerte Aggregation einzelner Partikel eintritt.

Um die UV-Absorptionseigenschaften der dielektrische Zusammensetzung noch weiter zu verbessern, kann die dielektrische Zusammensetzung ferner wenigstens einen organischen UV-Absorber enthalten. Für diesen Zweck sind grundsätzlich alle organischen UV-Absorber geeignet, wobei besonders gute Ergebnisse mit organischen UV-Absorbern erhalten werden, welche aus der Gruppe ausgewählt sind, welche aus Benzophenonen, Benzotriazolen, Oxalaniliden, Phenyltriazinen, Zimtsäureestern, Cyanacrylsäureestern, Salicylsäureestern und beliebigen Kombinationen aus zwei oder mehr der vorgenannten Verbindungen besteht.

Erfindungsgemäß ist das dielektrische Fluid aus der Gruppe ausgewählt, welche aus Fluorketonen, Fluorolefinen und beliebigen Kombinationen der vorgenannten Verbindungen besteht. Dabei kann das dielektrische Fluid bei der Anwendungstemperatur flüssig oder gasförmig sein. Gute Ergebnisse werden insbesondere erhalten, wenn das dielektrische Fluid bei einem Druck von 5 bar, bevorzugt 1,5 bar, einen Siedepunkt von weniger als 25 °C, bevorzugt von weniger als 0 °C, besonders bevorzugt von weniger als -10 °C und ganz besonders bevorzugt von weniger als -25 °C aufweist. Weiterhin sollten die Bestandteile des Fluids bis zu Temperaturen von mehr als 75 °C, bevorzugt von mehr als 105 °C und besonders bevorzugt von mehr als 125°C chemisch stabil sein. Wie vorstehend dargelegt, können der Mischung - zusätzlich zu den Nanopartikeln und dem dielektrischen organischen Fluid - herkömmliche Fluide zugesetzt werden, wie beispielsweise ein Edelgas, Sauerstoff, Stickstoff, Stickstoffoxid, Kohlendioxid, Kohlenmonoxid und beliebige Kombinationen von zwei oder mehr der vorgenannten Gase.

Gemäß einer besonders bevorzugten Ausführungsform der vorliegenden Erfindung enthält die Zusammensetzung als dielektrisches Fluid wenigstens ein Fluorketon, weil Fluorketone besonders klima- und umweltfreundlich sind und gleichzeitig gute dielektrische Eigenschaften aufweisen.

Dabei kann das Fluorketon teilweise fluoriert oder perfluoriert sein, wobei insbesondere mit perfluorierten Fluorketonen gute Ergebnisse erhalten werden.

Besonders vorteilhafte Beispiele für Fluorketone sind C₃-₁₅-Fluorketone, bevorzugt C₃-₁₀-Fluorketone, besonders bevorzugt C₃-₈-Fluorketone und ganz besonders bevorzugt C₃-₆-Fluorketone.

Besonders gute Ergebnisse werden insbesondere mit C₄-Fluorketonen erhalten und besonders bevorzugt mit Fluorketonen, welche aus der Gruppe ausgewählt sind, welche aus CF₃CF₂C(O)CF(CF₃)₂ (Dodecafluor-2-methylpentan-3-on), CF₃C(O)CF(CF₃)₂, CF₃CF₂C(O)CF(CF₃)₂, CH₃C(O)CF₂CF₂H, CF₃COCF(CF₃)₂, CF₃COCF₂CF₃ und CH₃C(O)CF₂CFHCF₃ und beliebigen Kombinationen von zwei oder mehr der vorgenannten Verbindungen besteht.

Gemäß einer weiteren besonders bevorzugten Ausführungsform der vorliegenden Erfindung enthält die Zusammensetzung als dielektrisches Fluid wenigstens ein Fluorolefin, weil Fluorolefine besonders klima- und umweltfreundlich sind und gleichzeitig gute dielektrische Eigenschaften aufweisen. Zudem können mit Vorteil auch Mischungen aus wenigstens einem Fluorketon und wenigstens einem Fluorolefin eingesetzt werden.

Dabei kann das Fluorolefin teilweise fluoriert oder perfluoriert sein.

Besonders vorteilhafte Beispiele für Fluorolefine sind C₂-₁₅-Fluorolefine, bevorzugt C₂-₁₀-Fluorolefine, besonders bevorzugt C₂-₈-Fluorolefine und ganz besonders bevorzugt C₂-₆-Fluorolefine.

Besonders gute Ergebnisse werden insbesondere mit einem Fluorolefin ausgewählt aus der Gruppe bestehend aus CF₃CFCH₂, CF₃CHCFH, CF₃CFCFH, HFCO sowie Kombinationen von zwei oder mehr der vorgenannten Verbindungen erhalten. Alle vorgenannten Verbindungen können insbesondere auch in Mischung mit einem anderen Fluorolefin und/oder mit wenigstens einem Fluroketon und/oder mit einem oder mehreren Gasen, wie Sauerstoff, Stickstoff, Stickstoffoxid, Kohlenmonoxid, Kohlendioxid und beliebigen Kombinationen von zwei oder mehr der vorgenannten Fluide, eingesetzt werden.

Ein weiterer Gegenstand der vorliegenden Erfindung ist die Verwendung einer zuvor beschriebenen erfindungsgemäßen dielektrischen Zusammensetzung in einer elektrischen Einrichtung.

Aufgrund ihrer guten dielektrischen Eigenschaften und Stabilität sowie Lebensdauer unter Nieder-, Mittel-, Hoch- und/oder Höchstspannung und insbesondere im Mittelspannungsbereich, wird die dielektrischen Zusammensetzung bevorzugt in einer elektrischen Einrichtung verwendet, welche bei einer Spannung von 0,1 bis 5.000 kV, bevorzugt von 0,1 bis 1.000 kV, besonders bevorzugt von 1 bis 60 kV und ganz besonders bevorzugt von 1 bis 52 kV betrieben wird.

In Weiterbildung des Erfindungsgedankens wird es vorgeschlagen, die dielektrische Zusammensetzung in einer Schalteinrichtung oder in einem Transformator zu verwenden.

Ferner betrifft die vorliegende Erfindung eine elektrische Einrichtung, insbesondere für den Nieder-, Mittel-, Hoch- und/oder Höchstspannungsbereich, welche umfasst:
a) ein Gehäuse,
b) wenigstens eine innerhalb des Gehäuses angeordnete spannungsführende Komponente und
c) innerhalb des Gehäuses eine zuvor beschriebene dielektrische Zusammensetzung, welche mit der spannungsführenden Komponente in direktem Kontakt steht.

Vorzugsweise ist die elektrische Einrichtung als Schalteinrichtung oder Transformator ausgebildet.

## Patentansprüche

1. Dielektrische Zusammensetzung, welche wenigstens ein dielektrisches organisches Fluid und Nanopartikel enthält, wobei die Zusammensetzung als dielektrisches Fluid wenigstens ein Fluorketon und/oder wenigstens ein Fluorolefin enthält und wobei mindestens 50 % der Nanopartikel aus einem Material zusammengesetzt sind, welches eine relative Dielektrizitätskonstante εᵣ zwischen 1 und 200 aufweist, und, wobei zumindest ein Teil der Nanopartikel aus einem Material zusammengesetzt ist, welches aus der Gruppe ausgewählt ist, welche aus Titandioxid, Zinkoxid, Eisenoxid, Zirkoniumoxid, Cerdioxid und beliebigen Kombinationen aus zwei oder mehr der vorgenannten Verbindungen besteht .

2. Dielektrische Zusammensetzung nach Anspruch 1,
**dadurch gekennzeichnet, dass**
mindestens 75 %, bevorzugt mindestens 90 %, insbesondere bevorzugt mindestens 95%, ganz besonders bevorzugt mindestens 99% und höchst bevorzugt alle Nanopartikel aus einem Material zusammengesetzt sind, welches eine relative Dielektrizitätskonstante εᵣ zwischen 1 und 200 aufweist.

3. Dielektrische Zusammensetzung nach Anspruch 1,
**dadurch gekennzeichnet, dass**
zumindest ein Teil der Nanopartikel aus Titandioxid und bevorzugt der kristallmorphologischen Variante Anatas zusammengesetzt ist.

4. Dielektrische Zusammensetzung nach einem der vorstehenden Ansprüche,
**dadurch gekennzeichnet, dass**
zumindest ein Teil der Nanopartikel bevorzugt mit einer siliziumorganischen und/oder karboorganischen Verbindung und besonders bevorzugt mit einem Silan und/oder Fluorsilan beschichtet ist.

5. Dielektrische Zusammensetzung nach zumindest einem der vorstehenden Ansprüche,
**dadurch gekennzeichnet, dass**
die Zusammensetzung als dielektrisches Fluid wenigstens ein Fluorketon und/oder wenigstens ein Fluorolefin enthält, wobei das resultierende Fluid bei einem Druck von 5 bar, besonders bevorzugt 1,5 bar, einen Siedepunkt von weniger als 25 °C, bevorzugt von weniger als 0 °C, besonders bevorzugt von weniger als -10 °C und ganz besonders bevorzugt von weniger als -25 °C aufweist, und/oder die Bestandteile des Fluids bis zu Temperaturen von mehr als 75 °C, bevorzugt von mehr als 105 °C und besonders bevorzugt von mehr als 125°C chemisch stabil sind.

6. Dielektrische Zusammensetzung nach Anspruch 5,
**dadurch gekennzeichnet, dass**
das wenigstens eine Fluorketon ein C₃-₁₅-Fluorketon, bevorzugt ein C₃-₁₀-Fluorketon, besonders bevorzugt ein C₃-₈-Fluorketon und ganz besonders bevorzugt ein C₃-₆-Fluorketon ist.

7. Dielektrische Zusammensetzung nach Anspruch 5 oder 6,
**dadurch gekennzeichnet, dass**
das wenigstens eine Fluorolefin ein C₂-₁₅-Fluorolefin, bevorzugt ein C₂-₁₀-Fluorolefin, besonders bevorzugt ein C₂-C₈-Fluorolefin und ganz besonders bevorzugt ein C₂-C₆-Fluorolefin ist.

8. Verwendung einer dielektrischen Zusammensetzung nach zumindest einem der vorstehenden Ansprüche in einer elektrischen Einrichtung, welche bevorzugt bei einer Spannung von 0,1 bis 5.000 kV, bevorzugt von 0,1 bis 1.000 kV, besonders bevorzugt von 1 bis 60 kV und ganz besonders bevorzugt von 1 bis 52 kV betrieben wird.

9. Elektrische Einrichtung, insbesondere für den Nieder-, Mittel-, Hoch- und/oder Höchstspannungsbereich, welche umfasst:
a) ein Gehäuse,
b) wenigstens eine innerhalb des Gehäuses angeordnete spannungsführende Komponente und
c) innerhalb des Gehäuses eine dielektrische Zusammensetzung nach zumindest einem der Ansprüche 1 bis 7, welche mit der spannungsführenden Komponente in direktem Kontakt steht.

## Claims

1. A dielectric composition which includes at least one dielectric organic fluid and nanoparticles, wherein the composition includes at least one fluoroketone and/or at least one fluoroolefin as the dielectric fluid; and wherein
at least 50% of the nanoparticles are composed of a material which has a relative dielectric constant εᵣ between 1 and 200, and wherein at least some of the nanoparticles are composed of a material which is selected from the group comprising titanium dioxide, zinc oxide, iron oxide, zirconium oxide, cerium dioxide and any desired combinations of two or more of the aforementioned compounds.

2. A dielectric composition in accordance with claim 1,
**characterized in that**
at least 75%, preferably at least 90%, in particular preferably at least 95%, very particularly preferably at least 99% and most preferably all of the nanoparticles are composed of a material which has a relative dielectric constant εᵣ between 1 and 200.

3. A dielectric composition in accordance with claim 1,
**characterized in that**
at least some of the nanoparticles are composed of titanium dioxide and preferably of the crystal morphological variant anatase.

4. A dielectric composition in accordance with any one of the preceding claims,
**characterized in that**
at least some of the nanoparticles are preferably coated with an organosilicon and/or carbo-organic compound and are particularly preferably coated with a silane and/or a fluorosilane.

5. A dielectric composition in accordance with any one of the preceding claims,
**characterized in that**
the composition includes at least one fluoroketone and/or at least one fluoroolefin as the dielectric fluid, with, at a pressure of 5 bar, particularly preferably of 1.5 bar, the resulting fluid having a boiling point of less than 25°C, preferably of less than 0°C, particularly preferably of less than -10°C and very particularly preferably of less than -25°C; and/or **in that** the components of the fluid are chemically stable up to temperatures of more than 75°C, preferably of more than 105°C and particularly preferably of more than 125°C.

6. A dielectric composition in accordance with claim 5,
**characterized in that**
the at least one fluoroketone is a C₃₋₁₅ fluoroketone, preferably a C₃-₁₀ fluoroketone, particularly preferably a C₃-₈ fluoroketone and very particularly preferably a C₃-₆ fluoroketone.

7. A dielectric composition in accordance with claim 5 or claim 6, **characterized in that**
the at least one fluoroolefin is a C₂-₁₅ fluoroolefin, preferably a C₂-₁₀ fluoroolefin, particularly preferably a C₂-C₈ fluoroolefin and very particularly preferably a C₂-C₆ fluoroolefin.

8. Use of a dielectric composition in accordance with at least one of the preceding claims in an electrical device which is preferably operated at a voltage of 0.1 to 5,000 kV, preferably of 0.1 to 1,000 kV, particularly preferably of 1 to 60 kV and very particularly preferably of 1 to 52 kV.

9. An electrical device, in particular for the low voltage range, the medium voltage range, the high voltage range and/or the maximum voltage range, which comprises:
a) a housing;
b) at least one live component arranged within the housing; and
c) a dielectric composition in accordance with at least one of the claims 1 to 7 within the housing, said dielectric composition being in direct contact with the live component.

## Revendications

1. Composition diélectrique contenant au moins un fluide organique diélectrique et des nanoparticules, la composition contenant comme fluide diélectrique au moins une fluorocétone et/ou au moins une fluorooléfine et au moins 50% des nanoparticules étant composées d'un matériau ayant une constante diélectrique relative εᵣ comprise entre 1 et 200, et au moins une partie des nanoparticules étant composées d'un matériau choisi parmi le groupe comprenant le dioxyde de titane, l'oxyde de zinc, l'oxyde de fer, l'oxyde de zirconium, le dioxyde de cérium et des combinaisons quelconques de deux ou plusieurs des composés mentionnés.

2. Composition diélectrique selon la revendication 1,
**caractérisée en ce que**
au moins 75 %, de préférence au moins 90 %, de manière particulièrement préférée au moins 95 %, de manière tout particulièrement préférée au moins 99 % et de préférence absolue toutes les nanoparticules sont composées d'un matériau qui présente une constante diélectrique relative εᵣ comprise entre 1 et 200.

3. Composition diélectrique selon la revendication 1,
**caractérisée en ce que**
au moins une partie des nanoparticules sont composées de dioxyde de titane et de préférence de la variante morphologique cristalline qu'est l'anatase.

4. Composition diélectrique selon l'une des revendications précédentes, **caractérisée en ce que**
au moins une partie des nanoparticules sont de préférence revêtues d'un composé organosilicié et/ou carbo-organique et de manière particulièrement préférée d'un silane et/ou d'un fluorosilane.

5. Composition diélectrique selon l'une au moins des revendications précédentes,
**caractérisée en ce que**
la composition contient comme fluide diélectrique au moins une fluorocétone et/ou au moins une fluorooléfine, le fluide résultant ayant un point d'ébullition inférieur à 25 °C, de préférence inférieur à 0 °C, de manière particulièrement préférée inférieur à -10 °C et de manière tout particulièrement préférée inférieur à -25 °C, à une pression de 5 bar, de manière particulièrement préférée de 1,5 bar, et/ou
les constituants du fluide sont chimiquement stables jusqu'à des températures supérieures à 75 °C, de préférence supérieures à 105 °C et de manière particulièrement préférée supérieures à 125 °C.

6. Composition diélectrique selon la revendication 5,
**caractérisée en ce que**
ladite au moins une fluorocétone est une fluorocétone en C₃₋₁₅, de préférence une fluorocétone en C₃₋₁₀, de manière particulièrement préférée une fluorocétone en C₃₋₈ et de manière tout particulièrement préférée une fluorocétone en C₃₋₆.

7. Composition diélectrique selon la revendication 5 ou 6,
**caractérisée en ce que**
ladite au moins une fluorooléfine est une fluorooléfine en C₂₋₁₅, de préférence une fluorooléfine en C₂₋₁₀, de manière particulièrement préférée une fluorooléfine en C₂₋₈ et de manière tout particulièrement préférée une fluorooléfine en C₂₋₆.

8. Utilisation d'une composition diélectrique selon l'une au moins des revendications précédentes dans un dispositif électrique qui est de préférence exploité à une tension de 0,1 à 5 000 kV, de préférence de 0,1 à 1 000 kV, de manière particulièrement préférée de 1 à 60 kV et de manière tout particulièrement préférée de 1 à 52 kV.

9. Dispositif électrique, en particulier pour la gamme des basses, moyennes, hautes et/ou très hautes tensions, qui comprend
a) un boîtier,
b) au moins un composant sous tension disposé à l'intérieur du boîtier; et
c) à l'intérieur du boîtier, une composition diélectrique selon l'une au moins des revendications 1 à 7, qui est en contact direct avec le composant sous tension.
